# EUROPEAN PATENT SPECIFICATION

(11) **EP 1 940 182 B1**
(45) Date of publication and mention of the grant of the patent: **11.12.2013**
(21) Application number: 05802185.8
(22) Date of filing: 18.10.2005
(51) Int. Cl.: H04W 36/10

(54) **Relocation methods of serving radio network controller to avoid the interference caused by UE measurement report**
Umordnungsverfahren einer versorgenden Funknetzsteuerung zur Vermeidung der durch einen UE-Messbericht verursachten Störung
Procédés de réattribution du controleur de réseau radio de desserte destiné à eviter l'interférence causée par un rapport de mesure de l'équipement de l' utilisateur

(43) Date of publication of application: 02.07.2008
(73) Proprietor: ZTE Corporation, Shenzhen, Guangdong 518057 (CN)
(72) Inventor: HUANG, Qing, Shenzhen, Guangdong 518057 (CN); SU, Jianfeng, Shenzhen, Guangdong 518057 (CN); XU, Dai, Shenzhen, Guangdong 518057 (CN); WANG, Liang, Shenzhen, Guangdong 518057 (CN); WANG, Qian, Shenzhen, Guangdong 518057 (CN)
(74) Representative: Bongiovanni, Simone
(86) International application number: PCT/CN2005/001707
(87) International publication number: WO 2007/045121

(56) References cited:
- CN-A- 1 305 328
- CN-A- 1 636 417
- KR-A- 20020 046 625
- US-A1- 2002 058 509
- US-A1- 2003 003 919
- US-A1- 2004 203 754
- "3rd Generation Partnership Project; Technical Specification Group Radio Access Network; Interlayer procedures in Connected Mode (Release 6)", 3GPP STANDARD; 3GPP TS 25.303, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V6.3.0, 27 June 2005 (2005-06-27), pages 1-76, XP050367332,
- "3rd Generation Partnership Project; Technical Specification Group Radio Access Network; Radio Resource Control (RRC); Protocol Specification (Release 6)", 3GPP STANDARD; 3GPP TS 25.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V6.7.0, 12 October 2005 (2005-10-12), pages 1-1167, XP050367984,

## Description

### Field of the Invention

The present invention relates to a relocation method of a Serving Radio Network Controller (hereinafter called SRNC for short) in a Wideband Code Division Multiple Access (hereinafter called WCDMA for short) system, especially to a SRNC relocation method for avoiding the interference caused by User Equipment (hereinafter called UE for short) measurement report, and more particularly, to a SRNC relocation method without other accompanying flows and a SRNC relocation method accompanied with cell update or registration area update for avoiding the interference caused by UE measurement report.

### Description of the Related Art

When trying to establish a WCDMA radio communication network, network operators usually require multiple Radio Network Controller (hereinafter called RNC for short) equipments to support the operating of the network. However, sometimes, for a specified UE, there is a RNC in charge of the configuration, management and maintenance of its radio resource, the RNC is named as SRNC, wherein the joint point of the access network side of the IU interface which is in the connection between the UE and the Core Network (hereinafter called CN for short) is located in the same SRNC as well. Due to roaming or other reasons, the SRNC relocation will be triggered when another RNC is required to serve as a SRNC. In the SRNC relocation process, the RNC, which is going to play the role of SRNC, is called target RNC and the RNC, which is going to exit from the role of SRNC, is called Source RNC. There are two phases in the above SRNC relocation process, namely, the first phase is the one for preparing the relocation, i.e. reserving resource for the target RNC and establishing new Radio Access Bearer (hereinafter called RAB for short); and the second phase is the one for converting the role of the SRNC. Protocol 3GPP 25303 V5.3.0 (3GPP is the 3^{rd} Generation Partnership Project) proposed three situations of SRNC relocation. The first situation is that there is no other accompanying flow in the relocation process. The second situation is that the cell update or registration area update is accompanied in the relocation process. The third situation is that hard handover is accompanied in the relocation process. Section 6.4.8 of Protocol 3GPP25303 V5.3 points out that in the role conversion phase of the SRNC relocation process, there is signaling interaction between the UMTS Terrestrial Radio Access Network (hereinafter called UTRAN for short) and an UE. For the relocation under the first and second situations, if the relocation process is expected to be proceeded successfully, the successful signaling interaction between the UTRAN and the UE must be ensured in the role conversion phase of the SRNC relocation process, wherein, firstly it is required to guarantee that the UE is able to receive the signaling sent by the UTRAN and the UTRAN is able to receive the signaling returned by the UE.

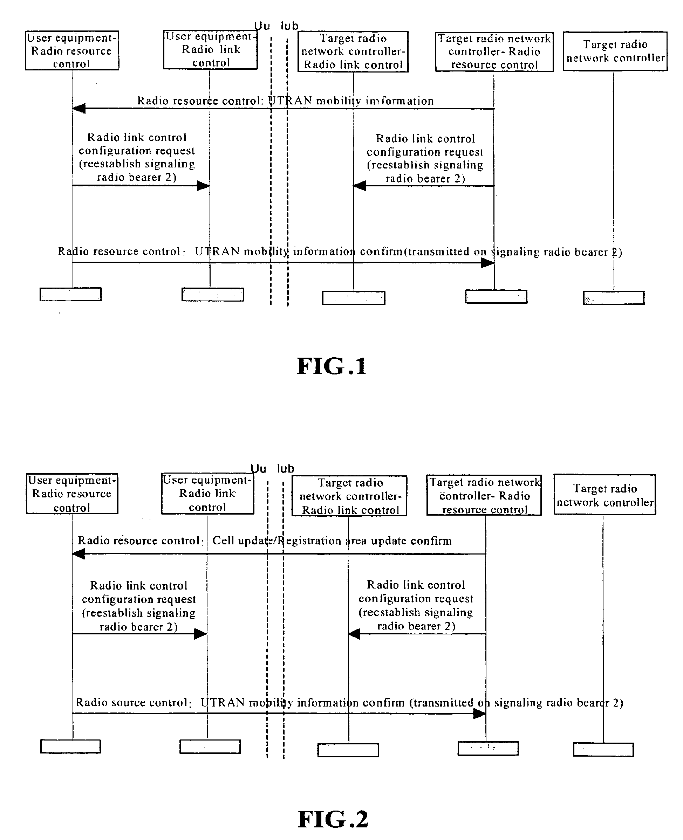

Under the above first situation, in the role conversion phase of the SRNC relocation process, the signaling interaction flow between the UTRAN and the UE is demonstrated in figure 1. Under the above second situation, in the role conversion phase of the SRNC relocation process, the signaling interaction flow between the UTRAN and the UE is demonstrated in figure 2. Referring to figures 1 and 2, it can be known that during the signaling interaction between the UTRAN and the UE, when the UTRAN sends a message to the UE, the UE will reestablish Signaling Radio Bearer 2 (hereinafter called SRB2 for short) and return a response message to the UTRAN on SRB2, wherein the Sequence Number (hereinafter called SN for short) of the data packet of the response message is counted start from 0. Besides, at the same time when the UE reestablishes SRB2, the UTRAN will also reestablish SRB2. After the UTRAN reestablishes SRB2, the SN of the data packet expected by the UTRAN in SRB2 is 0. If the first message received by the UTRAN after the reestablishment of its SRB2 is the response message returned by the UE on its SRB2 to the UTRAN, then the UTRAN is able to process the response message correctly, thereby the relocation process can proceeding. However, in this process, if other messages are transmitted to the UTRAN by the UE on the SRB2, for example, the UE measurement report, then the signaling interaction between the UTRAN and the UE will be interfered, accordingly resulting in the failure of the SRNC relocation.

Since the WCDMA system has been developed for a relatively short time in every country, it needs to be perfected gradually in accordance with the problems encountered as it is realized. For the interference of UE measurement report to the SRCN relocation process without other accompanying flows and the SRNC relocation process accompanied with cell update or registration area update, at present, no patent literature has brought forward this problem and no according method for avoiding this problem has been provided.

Document "3rd Generation Partnership Project; Technical Specification Group Radio Access Network; Interlayer procedures in Connected Mode (Release 6)" - 3GPP Standard; 3GPP TS 25.303, 20050601 3rd Generation Partnership Project (3GPP), Mobile Competence Centre 650, route des Lucioles F-06921 Sophia-Antipolis Cedex, France - No. V6.3.0, June 2005, pages 1-76, discloses procedures that assign, reconfigure and release radio resources, including transitions between different states and substates, handovers and measurement reports.

Document "3rd Generation Partnership Project; Technical Specification Group Radio Access Network; Radio Resource Control (RRC); Protocol Specification (Release 6)" - 3GPP Standard; 3GPP TS 25.331, 20050901 3rd Generation Partnership Project (3GPP), Mobile Competence Centre 650, route des Lucioles, F-06921 Sophia-Antipolis Cedex, France - No. V6.7.0, October 2005, pages 1-1167, discloses the Radio Resource Control protocol for the UE-UTRAN radio interface.

Document US 2002/058509 relates to mobile radio systems, especially code division multiple access (CDMA) systems, and in particular discloses a method for intersystem transfer of calls from a first cellular mobile radio system, using a macrodiversity transmission technique, to a second cellular mobile radio system.

### Summary of the Invention

For the SRNC relocation process without other accompanying flows and the SRNC relocation process accompanied with cell update or registration area update, if the message sent by the UTRAN to an UE is resent for several times , or the time that the UTRAN reestablishes SRB2 is before that the UTRAN sends a message to the UE, it is known by analysis that the interference caused by UE measurement report can not be avoided, therefore, a better way of SRNC relocation should be found to avoid the above problem.

In view of the above situation, the present invention aims to provide an optimal SRNC relocation method without accompanying flows or an optimal SRNC relocation method accompanied with cell update or registration area update in a WCDMA system. The optimized SRNC relocation method overcomes the interference caused by UE measurement report, and has a higher rate of successful relocation.

According to the analysis of the interference to the SRNC relocation caused by UE measurement report, if it can be ensured that the measurement report is not reported on SRB2 in the interaction of the UE and the UTRAN, this interference can be avoided. Thereby, for the SRNC relocation process without accompanying flows or the SRNC relocation process accompanied with cell update or registration area update, firstly, the UE is made not to report the measurement report during its interaction with the UTRAN by sending measurement control at the beginning of relocation, then, reset the UE measurement after the relocation is finished.

In order to achieve the above object, the present invention discloses a SRNC relocation method for avoiding the interference caused by UE measurement report according to claim 1; the method is applicable to a WCDMA system, wherein the following steps are included in said method:
Step 101: when a source RNC determines to initiate relocation, for the measurement of an UE that reports measurement report on the Radio Bearer (hereinafter called RB for short) of an Acknowledged Mode (hereinafter abbreviated as AM), sending measurement control, so that the UE is made not to report the measurement report on a SRB2 during its interaction with the UTRAN;
Step 102, the source RNC and a target RNC conducting relocation preparation;
Step 103, a CN sending a relocation command to the source RNC, to indicate the completion of the relocation preparation;
Step 104, the source RNC and the target RNC executing the role conversion of a SRNC;
Step 105, after becoming the SRNC, the target RNC returning a relocation completion message to the CN, to indicate the completion of the relocation; and
Step 106, the SRNC resetting the measurement of the UE. In order to realize the above object, the present invention discloses another SRNC relocation method for avoiding the interference caused by UE measurement report according to claim 5; the method is applicable to a WCDMA system, wherein the following steps are included in said method:
Step 201, when a source RNC determines to initiate relocation, the source RNC and a target RNC conducting relocation preparation;
Step 202, a CN sending a relocation command to the source RNC, to indicate the completion of the relocation preparation;
Step 203, for the measurement of the UE that reports measurement report on RB of an AM mode, the source RNC sending a measurement control, so that the UE is made not to report the measurement report on SRB2 during its interaction with the UTRAN;
Step 204, the source RNC and the target RNC executing role conversion of a SRNC;
Step 205, after becoming the SRNC, the target RNC returning a relocation completion message to the CN, to indicate the completion of the relocation; and
Step 206, the SRNC resetting the measurement of the UE.

Wherein, when the source SRC in the step 101 and step 201 triggers relocation, the source RNC records the measurement type of the UE opened currently and judges the reporting mode of the above measurement.

The above measurement type of the UE includes at least: intra-frequency measurement, inter-frequency measurement, inter-system measurement, service quantity measurement, quality measurement, internal measurement and location service measurement.

Otherwise, the measurement control in the step 101 and step 203 includes: ceasing the measurement the UE conducted currently or modifying the reporting mode of the measurement, i.e. making the UE measurement report to be reported on the RB of an Unacknowledged Mode (hereinafter called UM for short), thereby the measurement of the UE in the SRNC relocation process can be proceeded.

The present invention is easy to be operated, adopting the method according to the present invention can effectively avoid the interference caused by UE measurement report to the SRNC relocation process, and improve the stability of a WCDMA system. As to the interference caused by other messages reported on SRB2 to the SRNC relocation process, the similar method can be adopted to avoid it.

In order to make the above and other objects, characters and advantages of the present invention transpicuous, with reference to the accompanying drawings and preferred embodiments of the present invention, the following parts will illustrate the present invention in details.

### Brief Description of the Accompanying Drawings

Figure 1 is a flow chart of the signaling interaction between the UTRAN and an UE in the SRNC relocation process without other accompanying flows;
Figure 2 is a flow chart of the signaling interaction between the UTRAN and an UE in the SRNC relocation process accompanied with cell update and registration area update;
Figure 3 is a schematic diagram of the interference caused by UE measurement report in the interaction between the UTRAN and an UE in the SRNC relocation process;
Figure 4 is a flow chart of the SRNC relocation without other accompanying flows or the SRNC relocation accompanied with cell update or registration area update in a WCDMA system; and
Figure 5 is a flow chart of the SRNC relocation without other accompanying flows or the SRNC relocation accompanied with cell update and registration area update in a WCDMA system, according to the present invention.

### Detailed Description of the Invention

Embodiments of the invention will be hereinafter further described in detail with reference to the drawings, but it should not be regarded as a restriction to the present invention.

In a WCDMA system, the measurement of an UE is needed in the process of handover, location, dynamic rate adjustment, etc. A SRNC is capable of start, stop or modify multiple parallel measurements of the UE by using specialized measurement control information, and, moreover, these measurements can be controlled independently. The above measurement control information includes parameters such as measurement identity number, measurement type, measurement object, the quantity of measurement reports, and report mode. If the measurement control is to establish or modify measurements, then when the designated conditions in the measurement control information are satisfied, the UE will conduct the measurement report, which includes the measurement identity number and measurement results. The SRB used to report the measurement report is designated by the report mode parameter in the measurement control information sent by the SRNC. If the report mode designates to use the RB of UM mode, then the measurement report will be reported on SRB1; if the report mode designates to use the RB of AM mode, then the measurement report will be reported on SRB2.

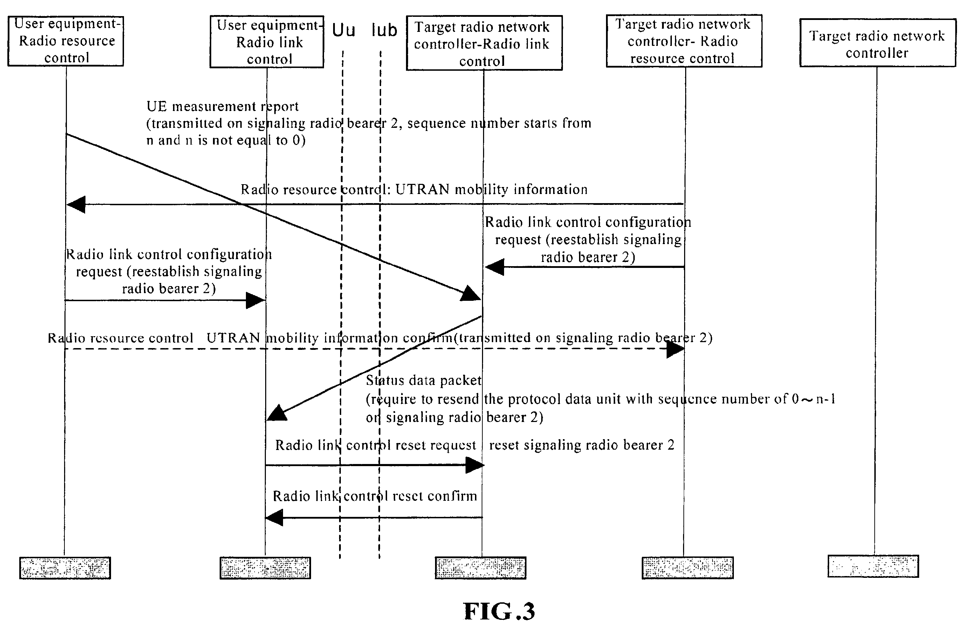

As to the relocation under the first and second situations pointed out in the Protocol 3GPP25303 V5.3.0, during the relocation process, if the UE measurement is being conducted and the measurement report is reported on SRB2, it will result in interference in the relocation process. The SRNC relocation process under the first situation will be described in the following. As shown in figure 3, when the SRNC relocation flow proceeds to the phase of signaling interaction between the UTRAN and the UE, if a data packet of the measurement report is sent out before the UE reestablishes SRB2, wherein the SN of the data packet the measurement report correspond to is n, since the UE and the UTRAN have conducted some signaling interaction and already sent multiple messages on SRB2, at this time, n is not equal to 0; thus when the data packet of the measurement report is transmitted via an air interface, due to some reasons, it will not be received until the UTRAN reestablishes SRB2. The data packet desired by the UTRAN is the one which SN is 0, but actually the data packet of the measurement report the UTRAN receives is not the one which SN is 0, then the UTRAN will send a status data packet to the UE, requiring the UE to resend the data packet which SN is 0~n-1. If the status data packet is received after the UE reestablishes SRB2, the UE knows that the UTRAN required to resend the data packet which SN is 0~n-1, however, the UE has not sent the data packet with the SN of 0~n-1 on SRB2 at this time, and will regard this status data packet as an illegal one and thus send a reset request, meanwhile, clears up its buffer of SRB2. After receiving the reset request from the UE, the UTRAN will return a reset response to the UE and clears up its buffer of SRB2 at the same time. When the UE initiates the reset request, if the response message to the UTRAN has not been sent out from the buffer, then this response message will be deleted. Or the response message to the UTRAN from the UE has been sent out, and have been received and put in the buffer by the UTRAN side for process, the response message will also be deleted when the UTRAN responds a reset respond message and clears up the buffer upon receiving a reset request sent by the UE. UTRAN will deem that it has not received the response message of the UE, and this will lead to the failure of signaling interaction between the UTRAN and the UE, which will also result in the SRNC relocation failure. For the SRNC relocation under the above second situation, the UE measurement report will also result in the same interference. In the same way, during the SRNC relocation process, the other messages sent by the UE to the UTRAN on SRB2 will also interfere with the SRNC relocation.

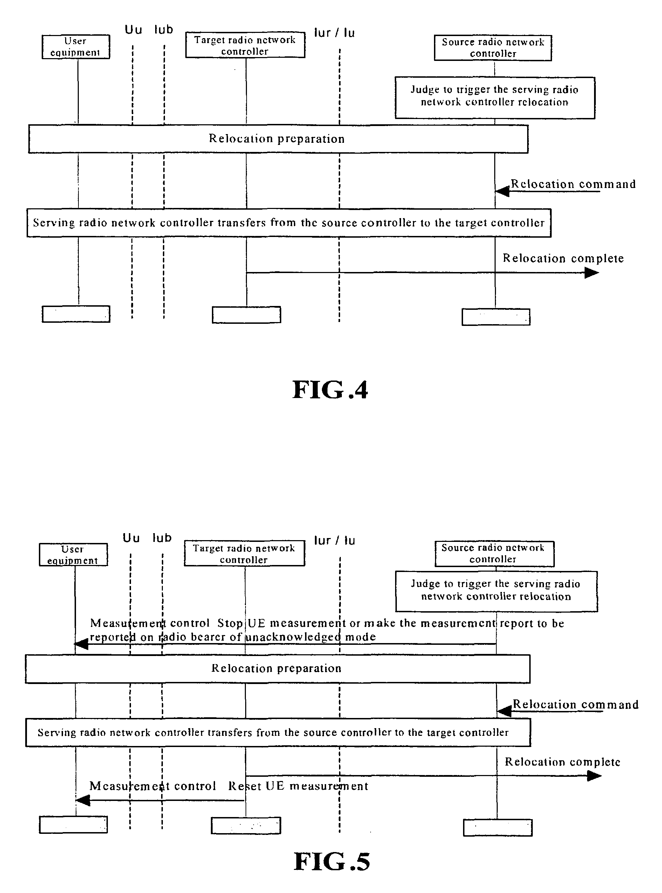

Figure 4 is a flow chart of the SRNC relocation without other accompanying flows or the SRNC relocation accompanied with cell update or registration area update in a WCDMA system; and

Figure 5 is a flow chart of the SRNC relocation without other accompanying flows or the SRNC relocation accompanied with cell update and registration area update in a WCDMA system, according to the present invention. Please refer to figure 5, in practical implementation, when a source RNC triggers relocation, the SRNC needs to record which UE's measurement has been opened currently and whether or not the report of these measurements are reported on RB of AM mode, then proceeds with the relocation in the following steps:
Step 1 : when the source RNC determines to initiate relocation, for the UE measurement that reporting measurement report on RB of AM mode, sending measurement control, wherein the measurement control can either cease the measurement or modify the report mode of the measurement to make the measurement be reported on RB of UM mode; and for a variety of UE measurements, respective processing is needed, which can be specified in the following steps:
Step 111, if the UE is conducting intra-frequency measurement and the measurement report is designated to be reported on RB of AM mode, then sending measurement control, to stop the intra-frequency measurement of the UE or make the measurement report to be reported on RB of UM mode;
Step 112, if the UE is conducting inter-frequency measurement and the measurement report is designated to be reported on RB of AM mode, then sending measurement control, to stop the inter-frequency measurement of the UE or make the measurement report to be reported on RB of UM mode;
Step 113, if the UE is conducting inter-system measurement and the measurement report is designated to be reported on RB of AM mode, then sending measurement control, to stop the inter-system measurement of the UE or make the measurement report to be reported on RB of UM mode;
Step 114, if the UE is conducting service quantity measurement and the measurement report is designated to be reported on RB of AM mode, then sending measurement control, to stop the service quantity measurement of the UE or make the measurement report to be reported on RB of UM mode;
Step 115, if the UE is conducting quality measurement and the measurement report is designated to be reported on RB of AM mode, then sending measurement control, to stop the quality measurement of the UE or make the measurement report to be reported on RB of UM mode;
Step 116, if the UE is conducting internal measurement and the measurement report is designated to be reported on RB of AM mode, then sending measurement control, to stop the internal measurement of the UE or make the measurement report to be reported on RB of UM mode; and
Step 117, if the UE is conducting location service measurement and the measurement report is designated to be reported on RB of AM mode, then sending measurement control, to stop the location service measurement of the UE or make the measurement report to be reported on RB of UM mode;
Step 2, executing the relocation preparation process; In this process, the source RNC sends a relocation request message to a CN. After receiving the relocation request message, the CN sends the relocation request message to a target RNC as well. After receiving the relocation request message, the target RNC reserves resource, establishes new radio access bearer and returns a relocation request confirmation message to the CN;
Step 3, after receiving the relocation request confirmation message returned by the target RNC in a certain time, the CN sending a relocation command message to the source RNC, to indicate the completion of the relocation preparation process;
Step 4, executing the role conversion of a SRNC from the source RNC to the target RNC, this process containing the signaling interaction of the UTRAN and the UE, as the above step 1 has already rendered that the UE measurement report is not reported on SRB2, the whole flow will be proceeded successfully as not being interfered by the UE measurement report during the signaling interaction between the UTRAN and the UE;
Step 5, the new SRNC, i.e. the target RNC returning a relocation completion message to the CN; and
Step 6, the new SRNC, i.e. the target RNC resetting the measurement of the UE through sending a measurement control message based on practical requirements.
Wherein, the step 1 can be performed after step 3 and before step 4, and if so, the specific steps as follows are included: Step 1, when a source RNC determines to initiate relocation, the source RNC and a target RNC conducting a relocation preparation;
Step 2, a CN sending a relocation command to the source RNC, to indicate the completion of the relocation preparation; Step 3, for the measurement of the UE that reporting measurement report on RB of an AM mode, the source RNC sending a measurement control, so that the UE is made not to report the measurement report on SRB2 during its interaction with the UTRAN;
Step 4, the source RNC and the target RNC executing the role conversion of a SRNC;
Step 5, after becomes the SRNC, the target RNC returning a relocation completion message to the CN, to indicate the completion of the relocation; and
Step 6, the SRNC resetting the measurement of the UE.

In the WCDMA system, the SRNC relocation is an important process of radio source control connection mobility, which can make users roam in different RNC cells. In order to ensure its success rate, possible interference leading to the failure of the flow has to be avoided. The above detailed explanation of the SRNC relocation can avoid the failure of SRNC relocation caused by an UE measurement report and has a higher rate of success.

## Claims

1. A method for relocating a serving radio network controller to avoid the interference of user equipment measurement report, said method is applicable to a Wideband Code Division Multiple Access System, said method comprising the following steps:
Step 101, when a source radio network controller determines to initiate relocation, for the measurement of an user equipment that reports measurement report on radio bearer of acknowledged mode, sending measurement control to make the user equipment to not report the measurement report on Signaling Radio Bearer 2, SRB2, during the interaction of the user equipment with the UTRAN;
Step 102, the source radio network controller and a target radio network controller conducting relocation preparation;
Step 103, a core network sending a relocation command to the source radio network controller, to indicate the completion of the relocation preparation;
Step 104, the source radio network controller and the target radio network controller executing role conversion of a serving radio network controller;
Step 105, after becoming the serving radio network controller, the target radio network controller returning a relocation completion message to the core network, to indicate the completion of the relocation; and
Step 106, the serving radio network controller resetting the measurement of the user equipment.

2. The method according to claim 1, wherein in the step 101, when the source radio network controller triggers relocation, the source radio network controller records the measurement type of the user equipment opened currently and judges the reporting mode of the above measurement.

3. The method according to claim 2, wherein the measurement type of the user equipment includes at least:
intra-frequency measurement, inter-frequency measurement, inter-system measurement, service quantity measurement, quality measurement, internal measurement and location service measurement.

4. The method according to claim 1, wherein the measurement control in the step 101 includes: ceasing the measurement the user equipment conducted currently or modifying the reporting mode of the measurement, i.e. making the user equipment measurement report to be reported on radio bearer of Unacknowledged Mode.

5. A method for relocating a serving radio network controller to avoid the interference of user equipment measurement report, said method is applicable to a Wideband Code Division Multiple Access System, said method comprising the following steps:
Step 201, when a source radio network controller determines to initiate relocation, the source radio network controller and a target radio controller conducting relocation preparation;
Step 202, a core network sending a relocation command to the source radio network controller, to indicate the completion of the relocation preparation;
Step 203, for the measurement of a user equipment that reports measurement report on radio access bearer of acknowledged mode, the source radio network controller sending measurement control to make the user equipment to not report the measurement report on Signaling Radio Bearer 2 , SRB2, during the interaction of the user equipment with the UTRAN;
Step 204, the source radio network controller and the target radio network controller executing role conversion of a serving radio network controller;
Step 205, after becoming the serving radio network controller, the target radio network controller sending a relocation completion message to the core network, to indicate the completion of the relocation; and
Step 206, the serving radio network controller resetting the measurement of the user equipment.

6. The method according to claim 5, wherein in the step 201, when the source radio network controller triggers relocation, the source radio network controller records the measurement type of the user equipment opened currently and judges the reporting mode of the above measurement.

7. The method according to claim 6, wherein the measurement type of the user equipment includes at least:
intra-frequency measurement, inter-frequency measurement, inter-system measurement, service quantity measurement, quality measurement, internal measurement and location service measurement.

8. The method according to claim 5, wherein the measurement control in the step 203 includes: ceasing the measurement the user equipment conducted currently or modifying the reporting mode of the measurement, i.e. making the user equipment measurement report to be reported on a radio bearer of Unacknowledged Mode.

## Patentansprüche

1. Verfahren zum Relokatieren eines dienenden Radionetzwerkkontrollers zum Vermeiden der Interferenz eines Benutzerausrüstungs-Messreports, wobei das Verfahren für ein Breit-band-Codeteilungs-Mehrfachszugriffssystem anwendbar ist, wobei das Verfahren die folgenden Schritte aufweist:
Schritt 101, wenn ein Quellenradionetzwerkkontroller bestimmt, dass Relokatieren für die Messung einer Benutzerausrüstung zu initiieren, welche einen Messreport auf einem Radioträger des bestätigten Modes berichtet, Senden einer Messsteuerung, um zu bewirken, dass die Benutzerausrüstung den Messreport nicht auf dem Signalradioträger 2 während der Wechselwirkung der Benutzerausrüstung mit dem UTRAN berichtet;
Schritt 102, wobei der Quellenradionetzwerkkontroller und ein Zielradionetzwerkkontroller eine Vorbereitung für das Relokatieren durchführen;
Schritt 103, wobei ein Kernnetzwerk einen Relokatierungsbefehl zum Quellenradionetzwerkkontroller sendet, um die Vervollständigung der Vorbereitung des Relokatierens anzuzeigen;
Schritt 104, wobei der Quellenradionetzwerkkontroller und der Zielradionetzwerkkontroller eine Rollenumwandlung eines dienenden Radionetzwerkkontrollers ausführen;
Schritt 105, wobei der Zielradionetzwerkkontroller, nachdem er der dienende Radionetzwerkkontroller wird, eine Relokatierungsvervollständigungsnachricht an das Kernnetzwerk zurückschickt, um die Vervollständigung des Relokatierens anzuzeigen; und
Schritt 106, wobei der dienende Radionetzwerkkontroller die Messung der Benutzerausrüstung zurücksetzt.

2. Verfahren nach Anspruch 1, wobei beim Schritt 101, wenn der Quellenradionetzwerkkontroller das Relokatieren triggert, der Quellenradionetzwerkkontroller den Messungstyp der Benutzerausrüstung, welche gerade geöffnet ist, aufzeichnet und den Berichtmode der obigen Messung bestimmt.

3. Verfahren nach Anspruch 2, wobei der Messtyp der Benutzerausrüstung zumindest beinhaltet: Innerfrequenzmessung, Zwischenfrequenzmessung, Zwischensystemmessung, Servicegrößenmessung, Qualitätsmessung, interne Messung und Positionsservicemessung.

4. Verfahren nach Anspruch 3, wobei die Messungssteuerung im Schritt 101 beinhaltet: Beenden der Messung, welche die Benutzerausrüstung gerade durchführt, oder Modifizieren des Berichtmode der Messung, d.h. bewirken, dass der Benutzerausrüstungs-Messreport auf dem Radioträger eines unbestätigten Modes berichtet wird.

5. Verfahren zum Relokatieren eines dienenden Radionetzwerkkontrollers zum Vermeiden der Interferenz des Benutzerausrüstungs-Messreports, wobei das Verfahren auf ein Breitband-Codeteilungs-Mehrfachzugriffsverfahren anwendbar ist, wobei das Verfahren die folgenden Schritte aufweist:
Schritt 201, wobei, wenn ein Quellenradionetzwerkkontroller ein initiieren des Relokatierens bestimmt, der Quellenradionetzwerkkontroller und ein Zielradionetzwerkkontroller eine Vorbereitung des Relokatierens durchführen;
Schritt 202, wobei ein Kernnetzwerk einen Relokatierungsbefehl an den Quellenradionetzwerkkontroller sendet, um die Vervollständigung der Vorbereitung des Relokatierens anzuzeigen;
Schritt 203, wobei der Quellenradionetzwerkkontroller für die Messung einer Benutzerausrüstung, welche einen Messbericht auf dem Radiozugangsträger des bestätigten Modes berichtet, eine Messungssteuerung sendet, um zu bewirken, dass die Benutzerausrüstung den Messreport nicht auf den Signalradioträger 2 während der Wechselwirkung der Benutzerausrüstung mit dem UTRAN sendet;
Schritt 204, wobei der Quellenradionetzwerkkontroller eine Rollenwandlung eines dienenden Radionetzwerkkontrollers ausführen;
Schritt 205, wobei der Zielradionetzwerkkontroller, nachdem er der dienende Radionetzwerkkontroller wird, eine Relokatierungsvervollständigungsnachricht an das Kernnetzwerk sendet, um die Vervollständigung des Relokatierens anzuzeigen; und
Schritt 206, wobei der dienende Radionetzwerkkontroller die Messung der Benutzerausrüstung zurücksetzt.

6. Verfahren nach Anspruch 5, wobei beim Schritt 201 der Quellenradionetzwerkkontroller, wenn der Quellenradionetzwerkkontroller das Relokatieren triggert, den Messungstyp der Benutzerausrüstung, welche gerade geöffnet ist aufzeichnet und den Berichtmode der obigen Messung bestimmt.

7. Verfahren nach Anspruch 6, wobei der Messtyp der Benutzerausrüstung zumindest beinhaltet: Innerfrequenzmessung, Zwischenfrequenzmessung; Zwischensystemmessung, Servicegrößenmessung; Qualitätsmessung, interne Messung und Positionsservicemessung.

8. Verfahren nach Anspruch 5, wobei die Messungssteuerung in dem Schritt 203 beinhaltet:
Beenden der Messung der Benutzerausrüstung, welche gerade durchgeführt wird, oder Modifizieren des Berichtsmodus der Messung, d.h. Bewirken, dass der BenutzerausrüstungsMessreport auch einem Radioträger eines unbestätigten Modes berichtet wird.

## Revendications

1. Procédé de relocalisation d'un contrôleur de réseau radio de desserte afin d'éviter l'interférence d'un rapport de mesure d'un équipement utilisateur, ledit procédé étant applicable à un système à accès multiple à répartition par code à large bande, ledit procédé comprenant les étapes suivantes :
Étape 101, lorsqu'un contrôleur de réseau radio source détermine qu'il faut entreprendre une relocalisation, pour la mesure d'un équipement utilisateur qui signale un rapport de mesure sur un support radio de mode reconnu, envoyer une commande de mesure pour amener l'équipement utilisateur à ne pas signaler le rapport de mesure sur un support radio de signalisation 2, SRB2, pendant l'interaction de l'équipement utilisateur avec l'UTRAN ;
Étape 102, le contrôleur de réseau radio source et un contrôleur de réseau radio cible réalisant une préparation de relocalisation ;
Étape 103, un réseau central envoyant une commande de relocalisation au contrôleur de réseau radio source, pour indiquer la fin de la préparation de relocalisation ;
Étape 104, le contrôleur de réseau radio source et le contrôleur de réseau radio cible exécutant une conversion de rôle d'un contrôleur de réseau radio de desserte ;
Étape 105, après être devenu le contrôleur de réseau radio de desserte, le contrôleur de réseau radio cible renvoyant un message de fin de relocalisation au réseau central, pour indiquer la fin de la relocalisation ; et
Étape 106, le contrôleur de réseau radio de desserte réinitialisant la mesure de l'équipement utilisateur.

2. Procédé selon la revendication 1, dans lequel, à l'étape 101, lorsque le contrôleur de réseau radio source déclenche la relocalisation, le contrôleur de réseau radio source enregistre le type de mesure de l'équipement utilisateur actuellement ouvert et juge le mode de signalisation de la mesure ci-dessus.

3. Procédé selon la revendication 2, dans lequel le type de mesure de l'équipement utilisateur comprend au moins : une mesure intra-fréquence, une mesure inter-fréquence, une mesure inter-système, une mesure de quantité de desserte, une mesure de qualité, une mesure interne et une mesure de localisation de desserte.

4. Procédé selon la revendication 1, dans lequel la commande de mesure à l'étape 101 consiste à :
interrompre la mesure de l'équipement utilisateur actuellement menée ou modifier le mode de signalisation de la mesure, c'est-à-dire amener le rapport de mesure de l'équipement utilisateur à être signalé sur un support radio de mode non reconnu.

5. Procédé de relocalisation d'un contrôleur de réseau radio de desserte afin d'éviter l'interférence d'un rapport de mesure d'un équipement utilisateur, ledit procédé étant applicable à un système à accès multiple à répartition par code à large bande, ledit procédé comprenant les étapes suivantes :
Étape 201, lorsqu'un contrôleur de réseau radio source détermine qu'il faut entreprendre une relocalisation, le contrôleur de réseau radio source et un contrôleur de réseau radio cible menant une préparation de relocalisation ;
Étape 202, un réseau central envoyant une commande de relocalisation au contrôleur de réseau radio source, afin d'indiquer la fin de la préparation de relocalisation ;
Étape 203, pour la mesure d'un équipement utilisateur qui signale un rapport de mesure sur un support d'accès radio de mode reconnu, le contrôleur de réseau radio source envoyant une commande de mesure afin d'amener l'équipement utilisateur à ne pas signaler le rapport de mesure sur un support radio de signalisation 2, SRB2, pendant l'interaction de l'équipement utilisateur avec l'UTRAN ;
Étape 204, le contrôleur de réseau radio source et le contrôleur de réseau radio cible exécutant une conversion de rôle d'un contrôleur de réseau radio de desserte ;
Étape 205, après être devenu le contrôleur de réseau radio de desserte, le contrôleur de réseau radio cible envoyant un message de fin de relocalisation au réseau central, pour indiquer la fin de la relocalisation ; et
Étape 206, le contrôleur de réseau radio de desserte réinitialisant la mesure de l'équipement utilisateur.

6. Procédé selon la revendication 5, dans lequel, à l'étape 201, lorsque le contrôleur de réseau radio source déclenche la relocalisation, le contrôleur de réseau radio source enregistre le type de mesure de l'équipement utilisateur actuellement ouvert et juge le mode de signalisation de la mesure ci-dessus.

7. Procédé selon la revendication 6, dans lequel le type de mesure de l'équipement utilisateur comprend au moins : une mesure intra-fréquence, une mesure inter-fréquence, une mesure inter-système, une mesure de quantité de desserte, une mesure de qualité, une mesure interne et une mesure de localisation de desserte.

8. Procédé selon la revendication 5, dans lequel la mesure de commande à l'étape 203 consiste à :
interrompre la mesure de l'équipement utilisateur actuellement menée ou modifier le mode de signalisation de la mesure, c'est-à-dire amener le rapport de mesure de l'équipement utilisateur à être signalé sur un support radio de mode non reconnu.
